# EUROPEAN PATENT APPLICATION

(11) **EP 3 009 496 A1**
(43) Date of publication of application: **20.04.2016**
(21) Application number: 14810509.1
(22) Date of filing: 12.06.2014
(51) Int. Cl.: C10M 169/04, C10M 171/00, C10N 10/04, C10N 30/08, C10N 40/02, C10N 50/10, F16C 33/66, C10N 10/02, C10N 30/06

(54) **GREASE COMPOSITION AND ROLLING BEARING**

(30) Priority: 12.06.2013 JP 2013123620
(71) Applicant: NSK Ltd., Tokyo 141-8560 (JP)
(72) Inventor: WATABE Eri, Fujisawa-shi Kanagawa 251-8501 (JP); TODA Yujiro, Fujisawa-shi Kanagawa 251-8501 (JP); TSUMURA Kanako, Fujisawa-shi Kanagawa 251-8501 (JP); HACHIYA Koichi, Fujisawa-shi Kanagawa 251-8501 (JP)
(74) Representative: Grünecker Patent- und Rechtsanwälte PartG mbB
(86) International application number: PCT/JP2014/065546
(87) International publication number: WO 2014/200048

(57) **Abstract**

A grease composition which contains an edible oil as a base oil and calcium stearate as a thickening agent, additionally contains a structure stabilizer for preventing the thermal curing of the composition, and has an unworked penetration level of 77 or more after being heated at 100°C for 100 hours; and a rolling bearing in which the grease composition is enclosed.

## Description

### Technical Field

The present invention relates to a grease composition, particularly, a grease composition which is highly safe to human body and suitable for a food machine, for example. The present invention also relates to a rolling bearing in which the grease composition is sealed.

### Background Art

Considering an environmental impact or safety to human body, for example, Patent Document I describes a grease composition including an edible oil as a base oil and a fatty acid metal salt as a thickener. In addition, Patent Document 2 describes a grease composition for food machines, in which a glycerin-derived or propylene glycol-derived glycerin fatty acid ester is included as a base oil and calcium stearate approved as a food additive is included as a thickener.

### Prior Art Document

### Patent Document

Patent Document 1: JP-A-H11-228983
Patent Document 2: JP-A-2009-91502

### Summary of the Invention

### Problem to be Solved by the Invention

However, calcium stearate has a problem that since its structure as a thickener is unstable, thickener fibers tend to grow over time in an environment applied with heat, resulting in hardening of a grease composition, and heat resistance is deteriorated.

Accordingly, an object of the present invention is to provide a grease composition where a structure of calcium stearate is stabilized, thereby ensuring that an environmental impact is reduced and heat resistance is excellent as well as safety to human body is high. Another object of the present invention is to provide a long-life rolling bearing suitable for food machines, or the like.

### Means for Solving the Problem

In order to attain the above-described object, the present invention provides the following grease composition and rolling bearing.
(1) A grease composition containing an edible oil as a base oil and calcium stearate as a thickener, wherein a structure stabilizer for preventing thermal hardening is added and an unworked penetration after heating at 100°C for 100 hours is 77 or more.
(2) The grease composition as described in (1), wherein the structure stabilizer is a monoglyceride or a polyhydric alcohol.
(3) A rolling bearing in which the grease composition described in (1) or (2) is sealed.

### Effects of the Invention

The grease composition of the present invention is a grease composition in which since both the edible oil as the base oil and calcium stearate as the thickener are for food use, the environmental impact is reduced and the safety to human body is high and furthermore, a structure stabilizer is added to enhance the structure stability of calcium stearate, and therefore, high safety and excellent heat resistance are achieved.

### Brief Description of the Drawings

Fig. 1 is a graph showing results of a static heating test.
Fig. 2 is a graph showing results of a seizing durability test.
Fig. 3 is a graph showing results of a wear resistance test.
Fig. 4 is a graph showing a relationship between an unworked penetration after heating and a seizing durability life.
Fig. 5 is a graph showing a relationship between a penetration ratio between before and after heating and a wear resistance ratio.
Fig. 6 is a graph showing a relationship between (worked penetration/oil separation) and a wear resistance ratio.

### Detailed Description of Embodiments

### (Grease Composition)

The grease composition of the present invention uses an edible oil as a base oil and uses calcium stearate as a thickener.

The edible oil as the base oil may be a saturated fatty acid triglyceride which is an ester of a saturated fatty acid and glycerin, soybean oil, rapeseed oil, safflower oil, corn oil, cottonseed oil, sesame oil, olive oil, coconut oil, palm oil, or the like, and may be a mixed oil thereof. In addition, other animal/vegetable oils may be appropriately mixed.

Among others, a saturated fatty acid triglyceride is preferred, and a mixture of a saturated fatty acid triglyceride (C8 saturated fatty acid triglyceride) composed of a saturated fatty acid having a carbon number of 8 and glycerin and a saturated fatty acid triglyceride (C10 saturated fatty acid triglyceride) composed of a saturated fatty acid having a carbon number of 10 and glycerin, or a saturated fatty acid glyceride having mixed in one molecule thereof a saturated fatty acid ester moiety with a carbon number of 8 and a saturated fatty acid ester moiety with a carbon number of 10, is more preferred. As for the mixing ratio of C8 saturated fatty acid triglyceride and C10 saturated fatty acid triglyceride, C8 saturated fatty acid triglyceride : C10 saturated fatty acid triglyceride is preferably from 60:40 to 90:10, more preferably from 70:30 to 80:20.

In the case of using a saturated fatty acid triglyceride, the kinematic viscosity at 40°C thereof is preferably from 8 to 120 mm²/s. If the kinematic viscosity is less than 8 mm²/s (40°C), heat resistance is highly likely to be poor, and if it exceeds 120 mm²/s (40°C), shear resistance of the base oil itself is increased, which causes increase in a starting torque and rotary torque when the base oil is sealed in a rolling bearing. The kinematic viscosity at 40°C is preferably from 8 to 50 mm²/s, more preferably from 10 to 35 mm²/s, still more preferably from 10 to 20 mm²/s.

For the calcium stearate as the thickener, a food additive or a medicinal additive, which is compliant with official compendiums such as Japanese Standards of Food Additives and Japanese Pharmacopoeia, is preferably used. The amount of the thickener is preferably from 5 to 35 mass% of the total amount of the grease composition. If the amount of the thickener is less than 5 mass%, shear stability is deteriorated and when applied to a sliding/rolling device such as rolling bearing, the grease composition is softened due to shearing action in a sliding/rolling portion and leaks excessively. On the other hand, if the amount of the thickener exceeds 35 mass%, the proportion of the base oil used for lubrication may be too much reduced, causing imbalance. The amount of the thickener is preferably from 10 to 28 mass%, more preferably from 12 to 25 mass%, still more preferably from 13 to 23 mass%.

In the grease composition of the present invention, a structure stabilizer is added so as to stabilize the calcium stearate structure. The structure stabilizer is preferably a monoglyceride or a polyhydric alcohol, and a food additive or a medicinal additive, which is compliant with official compendiums such as Japanese Standards of Food Additives and Japanese Pharmacopoeia, is preferred. Specifically, the structure stabilizer includes palm hardened oil monoglyceride, oleic acid monoglyceride, glycerin, or the like.

The amount of the structure stabilizer added is not limited as long as it is an amount capable of stabilizing the calcium stearate structure, but the amount added is, relative to the calcium stearate, preferably from 5 to 6.5 mass% in the case of palm hardened oil monoglyceride and from 1 to 2 mass% in the case of glycerin.

By the addition of the structure stabilizer, the heat resistance of the grease composition is enhanced. Specifically, as demonstrated in Examples later, the unworked penetration after heating at 100°C for 100 hours becomes 77 or more.

In addition, the worked penetration is preferably NLGI consistency No. 2 or 3.

In the grease composition of the present invention, additives for an ordinary grease can be added as long as the effects of the present invention are not lost. Specifically, the additive may be an antioxidant, a rust preventive, an extreme-pressure agent, a friction regulator, a pH regulator, or the like, but those having a low environmental impact and being highly safe to the human body are preferably selected. For example, as the antioxidant, vitamins, or the like are used.

The method for preparing the grease composition may include adding calcium stearate and a structure stabilizer to an edible oil as a base oil, stirring the mixture under heating, rapidly cooling the entirety to a semi-solid state after the calcium stearate is completely dissolved, adding, if desired, other additives, and then kneading the mixture by a kneader such as roll mill. If the cooling after dissolution of calcium stearate is slow cooling to room temperature by standing, the calcium stearate is coagulated, and a soft grease composition is formed, causing a problem of grease leakage.

### (Rolling Bearing)

The present invention also relates to a rolling bearing in which the grease composition is sealed. The kind of the rolling bearing is not limited, and, for example, a deep-groove ball bearing, an angular contact ball bearing, a cylindrical roller bearing, a needle roller bearings, or a tapered roller bearing is filled with the grease composition and sealed by a seal member.

### Examples

The present invention is described in greater detail below by referring to Examples and Comparative Examples, but the present invention is not limited thereto.

### (Example 1)

14 g of calcium stearate and 0.8 g of palm hardened oil monoglyceride were added to 80.2 g of saturated middle-chain fatty acid triglyceride (kinematic viscosity at 40°C: 14.8 mm²/s), and the mixture was stirred under heating at a temperature high enough to dissolve calcium stearate. After the complete dissolution of the calcium stearate, the resulting solution was poured into an aluminum vat which was previously water-cooled, and cooled with running water. Thereafter, 5 g of vitamin E as an antioxidant was added to and mixed with 95 g of a lubricant composition set into a grease, and the mixture was treated on a three-roll mill to obtain a grease composition. Here, the worked penetration was 244, the drop point was 112°C, and the oil separation wars 0.1%. Incidentally, the oil separation was measured based on ASTM-D566-76.

### (Example 2)

14 g of calcium stearate and 0.2 g of glycerin were added to 80.8 g of saturated middle-chain fatty acid triglyceride (kinematic viscosity at 40°C: 14.8 mm²/s), and the mixture was stirred under heating at a temperature high enough to dissolve calcium stearate. After the complete dissolution of calcium stearate, the resulting solution was poured into an aluminum vat which was previously water-cooled, and cooled with running water. Thereafter, 5 g of vitamin E as an antioxidant was added to and mixed with 95 g of the lubricant composition set into a grease, and the mixture was treated on a three-roll mill to obtain a grease composition. Here, the worked penetration was 238, the drop point was 112°C, and the oil separation was 0.1%.

### (Example 3)

12 g of calcium stearate and 0.2 g of glycerin were added to 82.2 g of saturated middle-chain fatty acid triglyceride (kinematic viscosity at 40°C: 14.8 mm²/s), and the mixture was stirred under heating at a temperature high enough to dissolve calcium stearate. After the complete dissolution of calcium stearate, the resulting solution was poured into an aluminum vat which was previously water-cooled, and cooled with running water. Thereafter, 5 g of vitamin E as an antioxidant was added to and mixed with 95 g of the lubricant composition set into a grease, and the mixture was treated on a three-roll mill to obtain a grease composition. Here, the worked penetration was 286, the drop point was 112°C, and the oil separation was 0.4%.

### (Example 4)

16 g of calcium stearate and 2.4 g of glycerin were added to 76.6 g of saturated middle-chain fatty acid triglyceride (kinematic viscosity at 40°C: 14.8 mm²/s), and the mixture was stirred under heating at a temperature high enough to dissolve calcium stearate. After the complete dissolution of calcium stearate, the resulting solution was poured into an aluminum vat which was previously water-cooled, and cooled with running water. Thereafter, 5 g of vitamin E as an antioxidant was added to and mixed with 95 g of the lubricant composition set into a grease, and the mixture was treated on a three-roll mill to obtain a grease composition. Here, the worked penetration was 257, the drop point was 109°C, and the oil separation was 0%.

### (Comparative Example 1)

14 g of calcium stearate was added to 81 g of saturated middle-chain fatty acid triglyceride (kinematic viscosity at 40°C: 14.8 mm²/s), and the mixture was stirred under heating at a temperature high enough to dissolve calcium stearate. After the complete dissolution of calcium stearate, the resulting solution was poured into an aluminum vat which was previously water-cooled, and cooled with running water. Thereafter, 5 g of vitamin E as an antioxidant was added to and mixed with 95 g of the lubricant composition set into a grease, and the mixture was treated on a three-roll mill to obtain a grease composition. Here, the worked penetration was 249, the drop point was 111 °C, and the oil separation was 0.8%.

### (Comparative Example 2)

13 g of calcium stearate was added to 82 g of saturated middle-chain fatty acid triglyceride (kinematic viscosity at 40°C: 14.8 mm²/s), and the mixture was stirred under heating at a temperature high enough to dissolve calcium stearate. After the complete dissolution of calcium stearate, the resulting solution was poured into an aluminum vat which was previously water-cooled, and cooled with running water. Thereafter, 5 g of vitamin E as an antioxidant was added to and mixed with 95 g of the lubricant composition set into a grease, and the mixture was treated on a three-roll mill to obtain a grease composition. Here, the worked penetration was 262, the drop point was 111°C, and the oil separation was 1.1%.

### (Comparative Example 3)

12 g of lithium 12-hydroxystearate was added to 81 g of mineral oil (kinematic viscosity at 40°C: 27.6 mm²/s), and the mixture was stirred under heating at a temperature high enough to dissolve lithium 12-hydroxystearate. After the complete dissolution of calcium stearate, the resulting solution was poured into an aluminum vat which was previously water-cooled, and cooled with running water. Thereafter, 5 g of vitamin E as an antioxidant was added to and mixed with 95 g of the lubricant composition set into a grease, and the mixture was treated on a three-roll mill to obtain a grease composition. Here, the worked penetration was 249, and the oil separation was 2%.

### (Comparative Example 4)

14 g of calcium stearate and 0.8 g of palm oil triglyceride were added to 80.2 g of saturated middle-chain fatty acid triglyceride (kinematic viscosity at 40°C: 14.8 mm²/s), and the mixture was stirred under heating at a temperature high enough to dissolve calcium stearate. After the complete dissolution of calcium stearate, the heating was stopped, and the solution was then allowed to cool to room temperature. Thereafter, 5 g of vitamin E as an antioxidant was added to and mixed with 95 g of the lubricant composition set into a grease, and the mixture was treated on a three-roll mill to obtain a grease composition. Here, the worked penetration was 340, and the oil separation was 1.8%.

Using the grease compositions obtained above, (1) a static heating test, (2) a seizing durability test, and (3) a wear resistance test were performed.

### (1) Static Heating Test

The grease composition was left standing still in a constant-temperature bath at 100C°C for 100 hours and then measured for the unworked penetration, and the change from the initial worked penetration was evaluated.

### (2) Seizing Durability Test

Using a seal-attached deep-groove ball bearing, "6203VV" (inner diameter: 17 mm; outer diameter: 47 mm), manufactured by NSK Ltd., 1.3 g of the grease composition was sealed therein, and the bearing was continuously rotated at a temperature of 95°C, P/C=0.12 and dmN=700,000. The time when the temperature abruptly rose was designated as the seizure time. The measurement results are shown by a relative value to the seizure time of Comparative Example 1.

### (3) Wear Resistance Test

The test was performed by a Shell sliding four-ball tester. For both the stationary test ball in the lower part and the rotated test ball in the upper part, a 1/2-inch steel ball was used. Only the rotated ball was coated with 0.1 g of the grease composition, and the test was performed under the conditions of a vertical load of 49 N, a rotation speed of 1,000 min⁻¹, a rotation time of 20 minutes, and a temperature from room temperature to as the temperature becomes. An average value of wear mark diameters of three stationary balls in the lower part after the test was calculated, and the measurement result was shown by a relative value to the average wear mark diameter of Comparative Example 1.

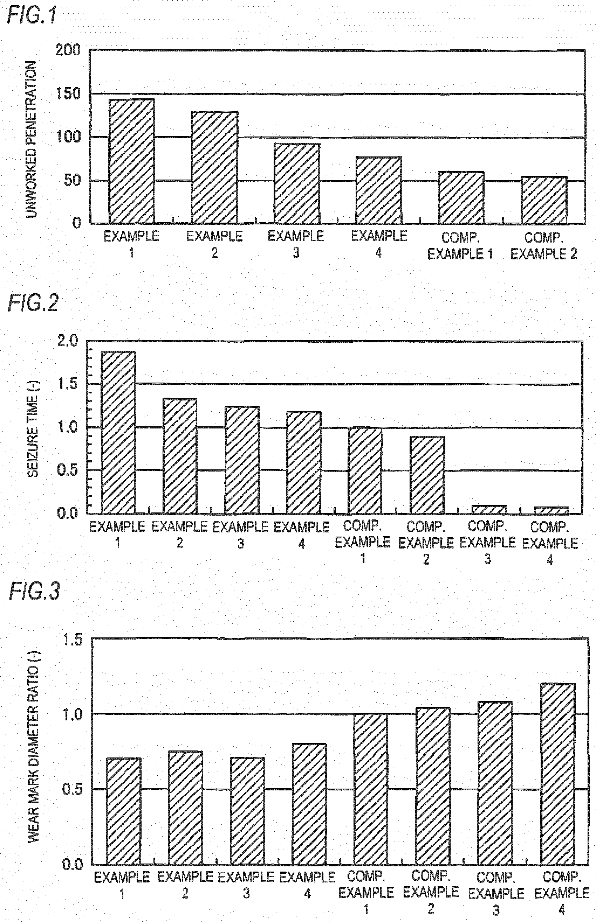

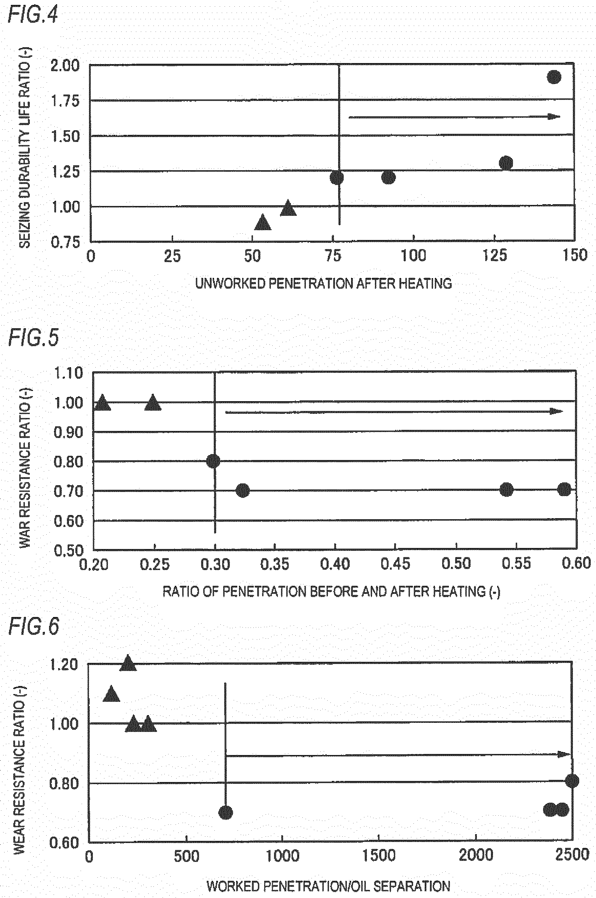

The results of each test are shown together with the grease composition in Table 1. In addition, Fig. 1 shows the results of (1) the stationary heating test, Fig. 2 shows the results of (2) the seizing durability test, and Fig. 3 shows the results of (3) the wear resistance test. Base on these results, the relationship between the unworked penetration after heating and the seizing durability life ratio, the relationship between the ratio of consistencies before and after heating and the wear resistance ratio, and the relationship between the (worked penetration/oil separation) and the wear resistance ratio are graphically shown in Fig. 4, Fig. 5, and Fig. 6, respectively.

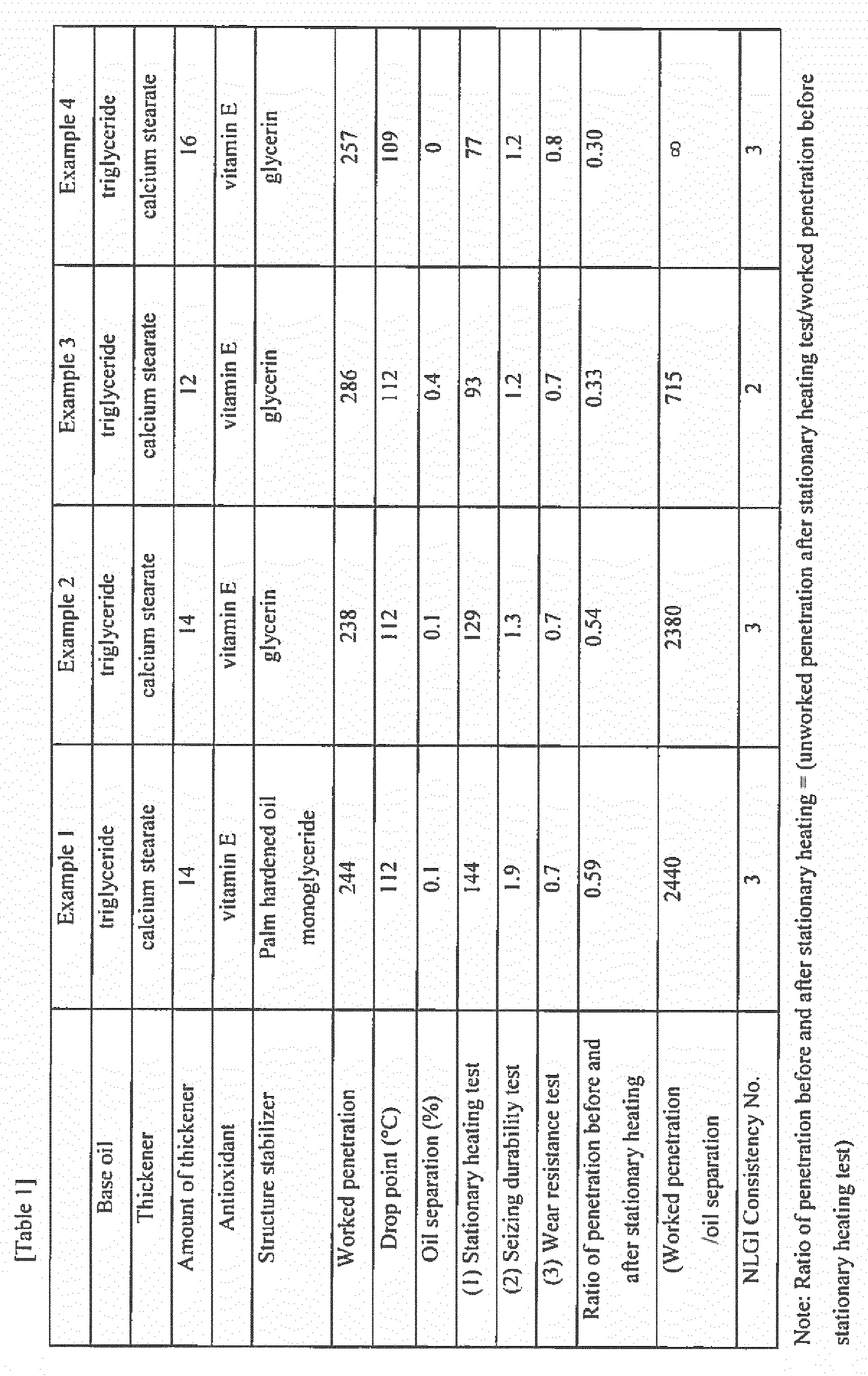

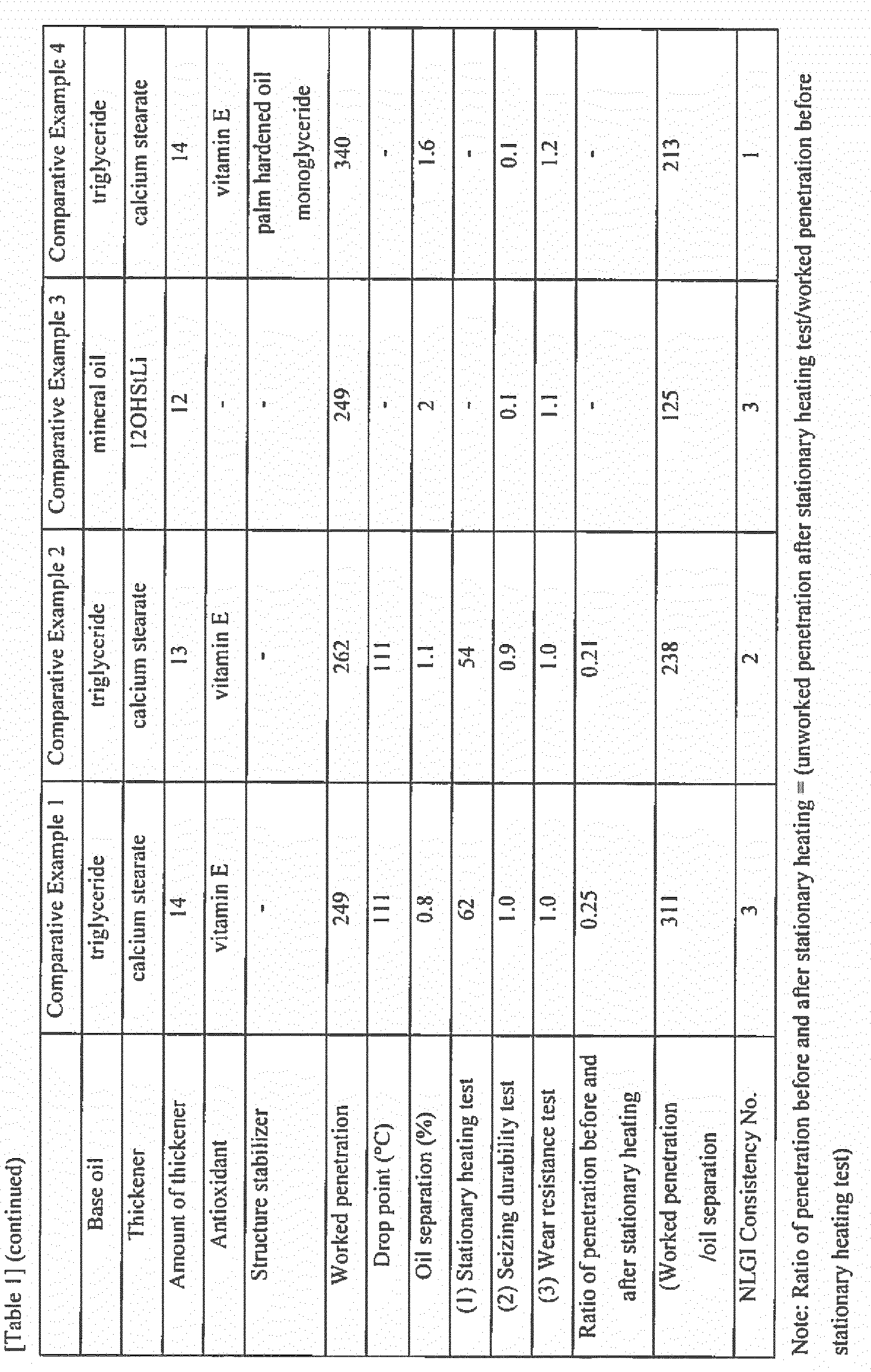

In Example 1, triglyceride and calcium stearate are used as the base oil and the thickener, respectively, and palm hardened oil monoglyceride is further used as the structure stabilizer; in Example 2, the structure stabilizer of Example 1 is changed to glycerin; and in Examples 3 and 4, the amount of the thickener is changed in Example 2. In all of these Examples, which are within the scope of the present invention, grease hardening after stationary heating is inhibited and when the grease is sealed in a bearing, an extended durability life and good wearing resistance are obtained. In turn, lubricity not only in a bearing but also in a region requiring grease lubrication (for example, a gear) is excellent.

Furthermore, as seen from Fig. 4, when the unworked penetration after a heating test, i.e., after standing at 100°C for 100 hours, is 77 or more, the anti-seizure life can be enhanced. It is understood that for more enhancing the anti-seizure life, the unworked penetration is preferably 93 or more, more preferably 129 or more.

It is seen from Fig. 5 that when the (unworked penetration after stationary heating/worked penetration before stationary heating) between before and after stationary heating is 0.30 or more, preferably 0.33 or more, this is effective in improving the wear resistance. The ratio is more preferably 0.54 or more.

It is seen from Fig. 6 that when the (worked penetration/oil separation) is 715 or more, preferably 2380 or more, this is effective in improving the wear resistance.

On the other hand, in Comparative Example I, the structure stabilizer is omitted from Example 1. When a structure stabilizer is not contained, grease hardening by heat is very significant. In addition, the grease is hardened due to heat generated by friction and since the grease is not sufficiently supplied to the friction surface, the wear mark diameter in the wear resistance test becomes large.

In Comparative Example 2, the amount of the thickener of Comparative Example 1 is decreased. Despite soft penetration in the initial stage, when a structure stabilizer is not mixed, grease hardening after heating is significant.

Comparative Example 3 is a general-purpose grease, and mineral oil and lithium 12-hydroxystearate are used as the base oil and the thickener, respectively. Compared with Examples, the seizing life is short and since mineral oil is used for the base oil, not only the lubricity is low but also the wear resistance is poor.

Comparative Example 4 is a grease having the same composition as in Example 1 but prepared by changing the cooling method. Although the amount of the thickener is also the same, due to change of the cooling method, the thickener is aggregated, and the grease is softened. Therefore, the grease leakage is significant in the seizing durability test, and the seizing life expires at an early stage. In addition, the grease is likely to scatter, and the wear mark diameter in the wear resistance test is large.

While the present invention has been described in detail and with reference to specific embodiments thereof, it will be apparent to one skilled in the art that various changes and modifications can be made therein without departing from the spirit and scope of the invention.

This application is based on Japanese Patent Application No. 2013-123620 filed on June 12, 2013, the contents of which are incorporated herein by reference.

### Industrial Applicability

The present invention is useful as a rolling bearing used in a food machine.

## Claims

1. A grease composition containing an edible oil as a base oil and calcium stearate as a thickener, wherein a structure stabilizer for preventing thermal hardening is added and the unworked penetration after heating at 100°C for 100 hours is 77 or more.

2. The grease composition according to claim 1,
wherein the structure stabilizer is a monoglyceride or a polyhydric alcohol.

3. A rolling bearing in which the grease composition according to claim I or 2 is sealed.
